# EUROPEAN PATENT SPECIFICATION

(11) **EP 2 460 944 B1**
(45) Date of publication and mention of the grant of the patent: **23.02.2022**
(21) Application number: 11189199.0
(22) Date of filing: 15.11.2011
(51) Int. Cl.: E03F 5/04

(54) **Flexible seamless drain**
Flexibler nahtloser Abfluss
Drain flexible sans soudure

(30) Priority: 01.12.2010 NL 2005800
(43) Date of publication of application: 06.06.2012
(73) Proprietor: Easy Sanitary Solutions B.V., 7575 BK Oldenzaal (NL)
(72) Inventor: Keizers, Jurgen Hendrik Peter Joseph, 7582 GH Losser (NL)
(74) Representative: 't Jong, Bastiaan Jacob

(56) References cited:
- EP-A1- 2 248 956
- EP-A2- 0 863 266
- WO-A1-2007/086734
- AU-B2- 629 113
- DE-U1-202009 015 093
- US-A- 5 139 407
- US-B1- 6 554 944

## Description

The invention relates to a drain according to the preamble of claim 1. Such a drain is known from AU 629 113 B2. Such drains are usually made of steel, such as stainless steel, or PVC (polyvinyl chloride). Other plastics, such as ABS (Acrylonitrile butadiene styrene), can also be used to shape known drains.

The materials used give the prior art drains non-flexible, form-retaining properties. The drawback of these properties is that differences in expansion between the floor in which the drain is arranged, the watertight layer and the drain can result in cracking of one of the components.

In addition, fixing the flexible watertight layer to a flange of the non-flexible, form-retaining drain can be difficult. Because the material properties of the two parts to be fixed together normally differ from each other, a compromise must often be made in respect of the adhesive to be applied.

In the case of form-retaining drains it is further necessary that they are incorporated in the floor at the moment the floor is cast or arranged. This is essential for obtaining the best possible connection between the form-retaining drain and the floor.

The drawback here is that the drain can be damaged during arranging of the floor, but also afterwards. This is because the floor is arranged at a very early stage of construction. A part of the drain will remain protruding here above the floor. Necessary operations are then carried out in the space in question before a finishing layer, such as for instance tiles, is arranged on the floor and the drain is fully incorporated in the floor.

WO 2007086734 shows a watertight layer on which a shower drain is integrally formed. It is hereby possible to make a sub-floor watertight in one operation and simultaneously form the lower tray of the shower drain. The fact that the walls of the lower tray have to be rigid is however discussed at length in this publication. When the underlayer is made of a flexible material, it is proposed to arrange strengthening means in the side walls of the lower tray in order to increase the thickness of the walls, or to impart a greater rigidity thereto by vulcanization. This publication in fact proposes no more than a lower tray of a rigid material on which a flexible material is integrally arranged.

It is now an object of the invention to reduce, or even obviate, the above stated drawbacks.

This object is achieved with a drain according to the invention as claimed in claim 1.

The drain according to the invention is manufactured from a flexible material and is seamless. Because the lower tray of the drain is now flexible differences in expansion can be compensated more easily. In addition, the fixing of a flexible watertight layer to a flexible flange can be performed more easily and more reliably.

Owing to the flexibility a flange can in addition connect better to a slope in a surrounding floor. Because it is preformed, the drain will moreover connect well to transitions in the floor. If a usual flexible layer were to be used, folds and ridges would then result in the layer at such transitions.

Because the flexible material also runs up to the outlet opening in wholly seamless manner, the surface to be sealed is formed only by the edge of the outlet opening. In prior art drains the surface to be sealed is on the other hand formed by the whole periphery of the drain. In the drain according to the invention a reliable seal can thus be obtained more easily.

With the drain according to the invention it is further possible to incorporate an outlet pipe or a siphon while arranging the floor. The necessary operations in the space can then be carried out, after which the floor is finished. The flexible lower tray is connected here to the outlet pipe or the siphon, after which a finishing layer can be arranged on the floor. A connector can preferably be provided on the flexible lower tray, whereby it can be easily connected to the outlet pipe or siphon.

An additional advantage is that arranging a finishing layer such as tiles takes place separately of arranging the siphon. There cannot therefore be any disputes concerning liability.

When the floor is arranged or cast a recess must be provided in which the drain according to the invention can be later arranged. This recess can for instance be provided by arranging a foam part during casting which is later removed.

The recess can also be provided by covering the whole floor with a filler plate and leaving a part clear only at the drain.

The flexible material is a sealing membrane. A sealing membrane is normally used to make a cement floor watertight and enable subsequent laying of a tile layer. Manufacturing the lower tray of the drain according to the invention from sealing membrane enables the use of an optimal adhesive to connect the flanges of the lower tray to the surrounding sealing membrane.

The dimensions of the drain can optionally be such that the flanges of the lower tray cover the whole floor surface, whereby the whole floor is given a watertight finish and is made suitable for tiling when the flexible drain according to the invention is arranged.

The use of a flexible material, as opposed to a rigid material such as stainless steel, ensures a sound reduction. The sound can optionally be reduced further by arranging a sound-reducing layer under the layer of flexible material.

Another advantage of the drain according to the invention is that possible leakage water, which penetrates under the finishing layer via this finishing layer, can run over the sealing membrane and still arrive at the drain. This therefore provides for a secondary drainage.

In the case the lower tray of the drain, not according to the invention, is manufactured from a flexible vinyl, it can be incorporated into a further vinyl floor in very simple manner. The flanges of the lower tray can be welded in a usual manner to the surrounding vinyl sheet. This creates a wholly seamless surface into which the drain according to the invention is integrated. This is highly advantageous in a hospital environment or the food industry.

When the lower tray of the drain according to the invention has been arranged, a rigid grating can be arranged therein. Such a rigid grating ensures that the walkable surface does not sag exaggeratedly anywhere under load. This grating can for instance be manufactured from steel, preferably stainless steel.

In yet another embodiment of the drain according to the invention a seamless outflow which protrudes into the outlet pipe is formed on the flexible lower tray. This outflow can be used as connector to an outlet pipe or siphon incorporated in the floor.

Although the drain according to the invention functions well, it may be desirable from an aesthetic viewpoint to nevertheless arrange a form-retaining lower tray in the flexible lower tray. It is not necessary here for this form-retaining lower tray to seal completely against the surrounding floor, since the drain according to the invention already ensures this.

By arranging a recess in the floor to be arranged or cast in which the drain according to the invention is placed, it is possible to work with thinner tiles, such as for instance glass mosaic tiles, while sufficient space remains in the lower tray for a reliable discharge of water. It is also possible to place a tile-shaped grating in the drain tray according to the invention. With such a tile-shaped grating a tile having the same thickness as the surrounding tiles is placed in a holder lying in the lower tray. Sufficient space for a reliable drainage of water is hereby also possible owing to the recess.

Not according to the invention is a method for forming a flexible and seamless lower tray for a drain according to the invention, which method comprises the steps of:
- providing a flexible watertight layer;
- providing a mould;
- heating the flexible watertight layer; and
- pressing the heated watertight layer onto the mould in order to form a lower tray in the watertight layer, wherein parts of the flexible watertight layer extend as flanges from the edges of the formed lower tray.

The usual sealing membrane or a vinyl layer can particularly be deformed easily after heating, whereby a lower tray can be formed easily and seamlessly in a strip of material.

A counter-mould is preferably provided so that the heated flexible watertight layer can be pressed between the mould and the counter-mould. A very precise shaping of the lower tray can hereby be obtained.

Using this technique for forming a flexible and seamless lower tray it is further also possible to form, in the flexible flanges of the lower tray, corners which connect to the surrounding upright walls.

Finally, the invention comprises a combination of a flexible, seamless drain according to the invention and a flexible watertight floor layer which surrounds the drain and is fused with the flanges of the drain. The flexible watertight floor layer is a sealing membrane. Complete covering of a floor can hereby be achieved, wherein the different parts are optimally connected to each other. It is even possible to provide one strip of sealing membrane or vinyl sheet with integrated drain tray, which is completely seamless and covers the whole floor of for instance a shower.

In an embodiment of the combination according to the invention the flexible floor layer is welded to the flanges of the flexible seamless drain. Although the watertight layer is constructed from separate components, a fusion is obtained by welding the connections, whereby an integral floor covering is in fact obtained.

Another method for forming a flexible and seamless lower tray for a drain according to the invention comprises the steps wherein the flexible watertight layer is tensioned and an upper mould is then pressed into a lower mould, wherein a part of the tensioned layer is clamped between the mould parts. A deformation of the watertight layer is in this way obtained due to the clamping force. Heating of the material is not necessary in this method.

A strengthening layer can optionally be arranged on the underside of the flexible material in order to support the shape in the flexible material. This strengthening layer can for instance be formed by a thin preformed layer of ABS.

These and other features of the invention are further elucidated with reference to the accompanying drawings.
Figures 1A and 1B show schematically two steps of the method not according to the invention.
Figure 2 shows a perspective view of a drain according to the invention.
Figure 3 shows a cross-sectional view of the drain according to the invention incorporated in a floor.
Figures 4-7 show different embodiments of a flexible drain according to the invention.

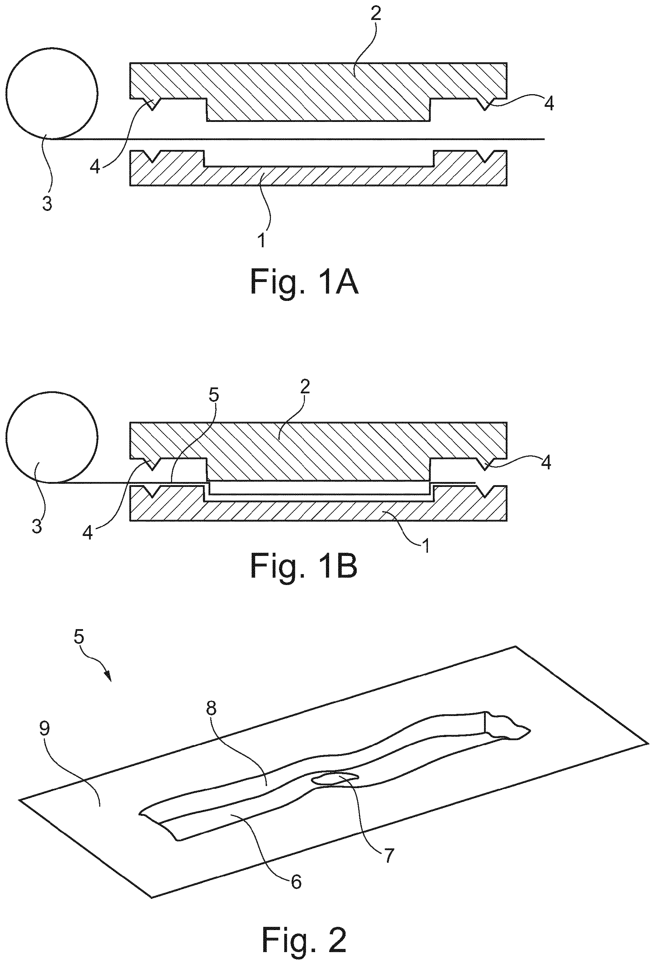

Figure 1A shows a mould 1 with a counter-mould 2 thereabove. A flexible watertight layer is carried between moulds 1, 2 from a roll 3. The two moulds 1, 2 are provided with blades 4 so that the layer is cut when moulds 1, 2 are brought together.

According to the method the layer 3 is heated, for instance by hot air. In addition, moulds 1, 2 can themselves also be heated.

When moulds 1, 2 are brought together, flexible layer 3 will be pressed between moulds 1, 2 and a lower tray is thus formed in flexible layer 3. The formed flexible lower tray 5 is simultaneously severed by blades 4.

Figure 2 shows the flexible lower tray 5. Lower tray 5 has a bottom surface 6 with an outlet opening 7, upright wall 8 along the peripheral edge of bottom surface 6 and flange parts 9.

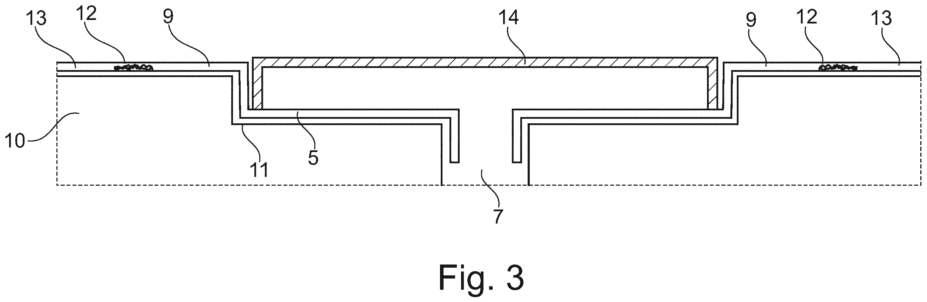

Figure 3 shows a cross-sectional view of flexible lower tray 5 arranged in a cement floor 10. Lower tray 5 is arranged in a recess 11 in cement floor 10. Flanges 9 of lower tray 5 are connected via a weld 12 to a surrounding floor covering layer 13. A seamless floor with integrated drain 5 thus results.

A grating 14 is finally also placed in lower tray 5.

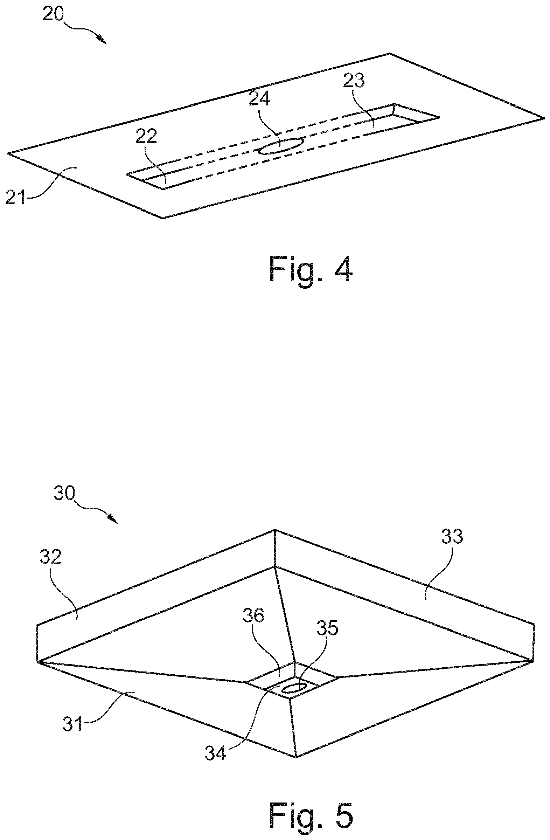

Figure 4 shows an embodiment 20 of a drain according to the invention. This drain 20 is formed from a layer of flexible material 21. Corners 22, 23 are preformed and an oval outlet opening 24 is provided in this layer of flexible material. When flexible layer 21 is laid in a recess in a floor, a drain, of which corners 22, 23 form part, will automatically be formed owing to the flexibility of material 21.

Figure 5 shows an embodiment 30 of a drain according to the invention. The flexible material 31 is dimensioned here such that a whole shower floor is covered. In addition, upright flanges 32, 33 are formed in the material along two edges. A lower tray with a bottom surface 34 with outlet opening 35 and upright edges 36 is further provided in the centre.

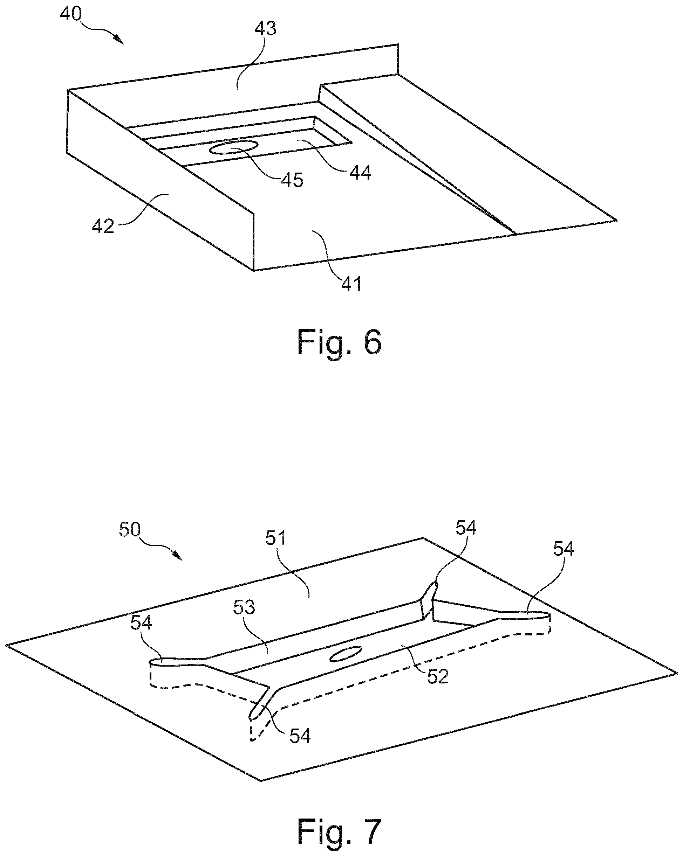

Figure 6 shows a drain 40 according to the invention which has the form of a so-called valley gutter. In addition, upright flanges 42, 43 which can be arranged against surrounding walls are provided along the edges of flexible material 41. A lower tray 44 with an outlet opening 45 is further formed in flexible material 41.

Figure 7 shows a drain 50 formed from a flexible material 51. The lower tray is folded here from the flexible material 51 so that a bottom surface 52 and surrounding upright walls 53 result. Folds 54 remain below the upper surface of drain 50 according to the invention and can be incorporated in the underlying floor.

## Claims

1. Drain (5; 20; 30; 40; 50), comprising a lower tray (5; 44) with a bottom surface (6; 34; 52), upright walls (8; 36; 53) arranged along the periphery of the bottom surface (6; 34; 52), an outlet opening (7; 24; 35; 45) arranged in the bottom surface(6; 34; 52) and flanges (9; 32; 33; 42; 43) arranged along the upper edge of the upright walls (8; 36; 53), wherein the lower tray (5; 44) is flexible, is of a flexible material (3; 21; 31; 41; 51) and is seamless,
wherein
the flexible material (3; 21; 31; 41; 51) is a sealing membrane for making a cement floor (10) watertight, enabling subsequent laying of a tile layer,
**characterized in that** the flanges (9; 32; 33; 42; 43) extend outwardly from the tray (5; 44).

2. Drain (5; 20; 30; 40; 50) as claimed in claim 1, comprising a rigid grating (14) arranged in the lower tray (5; 44) .

3. Drain (5; 20; 30; 40; 50) as claimed in claim 2, wherein the grating is manufactured from steel, preferably stainless steel.

4. Combination of a flexible seamless drain (5; 20; 30; 40; 50) as claimed in any of the foregoing claims and a flexible watertight floor layer (13) which surrounds the drain (5; 20; 30; 40; 50) and is fused with the flanges (9; 32; 33; 42; 43) of the drain (5; 20; 30; 40; 50).

5. Combination as claimed in claim 4, wherein the flexible watertight floor layer (13) is a sealing membrane.

6. Combination as claimed in claim 4 or 5, wherein the flexible floor layer (13) is welded to the flanges (9; 32; 33; 42; 43) of the flexible seamless drain (5; 20; 30; 40; 50) .

## Patentansprüche

1. Abfluss (5; 20; 30; 40; 50), umfassend ein unteres Fach (5; 44) mit einer Unterseitenfläche (6; 34; 52), aufrechten Wänden (8; 36; 53), die entlang des Umfangs der Unterseitenfläche (6; 34; 52) angeordnet sind, eine Auslassöffnung (7; 24; 35; 45), die in der Unterseitenfläche (6; 34; 52) angeordnet ist, und Flansche (9; 32; 33; 42; 43), die entlang des oberen Rands der aufrechten Wänden (8; 36; 53) angeordnet sind, wobei das untere Fach (5; 44) flexibel ist, aus einem flexiblen Material (3; 21; 31; 41; 51) ist und nahtlos ist,
wobei das flexible Material (3; 21; 31; 41; 51) eine Abdichtungsmembran ist, um einen Zementboden (10) wasserdicht zu machen, nachfolgendes Legen einer Fliesenschicht ermöglichend,
**dadurch gekennzeichnet, dass** sich die Flansche (9; 32; 33; 42; 43) von dem Fach (5; 44) nach außen erstrecken.

2. Abfluss (5; 20; 30; 40; 50) nach Anspruch 1, ein starres Gitter (14) umfassend, das in dem unteren Fach (5; 44) angeordnet ist.

3. Abfluss (5; 20; 30; 40; 50) nach Anspruch 2, wobei das Gitter aus Stahl, vorzugsweise rostfreiem Stahl hergestellt ist.

4. Kombination aus einem flexiblen nahtlosen Abfluss (5; 20; 30; 40; 50) nach einem der vorstehenden Ansprüche und einer flexiblen wasserdichten Bodenschicht (13), die den Abfluss (5; 20; 30; 40; 50) umgibt und mit den Flanschen (9; 32; 33; 42; 43) des Abflusses (5; 20; 30; 40; 50) verschmolzen ist.

5. Kombination nach Anspruch 4, wobei die flexible wasserdichte Bodenschicht (13) eine Abdichtungsmembran ist.

6. Kombination nach Anspruch 4 oder 5, wobei die flexible wasserdichte Bodenschicht (13) an die Flansche (9; 32; 33; 42; 43) des flexiblen nahtlosen Abflusses (5; 20; 30; 40; 50) geschweißt ist.

## Revendications

1. Évacuation (5 ; 20 ; 30 ; 40 ; 50), comprenant un receveur inférieur (5 ; 44) avec une surface inférieure (6 ; 34 ; 52), des parois verticales (8 ; 36 ; 53) agencées sur la périphérie de la surface inférieure (6 ; 34 ; 52), une ouverture de sortie (7 ; 24 ; 35 ; 45) agencée dans la surface inférieure (6 ; 34 ; 52) et des bords (9 ; 32 ; 33 ; 42 ; 43) agencés le long du rebord supérieur des parois verticales (8 ; 36 ; 53), dans laquelle le receveur inférieur (5 ; 44) est flexible, est composé d'un matériau flexible (3 ; 21 ; 31 ; 41 ; 51) et est sans soudure,
dans laquelle le matériau flexible (3 ; 21 ; 31 ; 41 ; 51) est une membrane d'étanchéité destinée à rendre un fond en ciment (10) étanche à l'eau, permettant la pose ultérieure d'une couche de carrelage,
**caractérisée en ce que** les bords (9 ; 32 ; 33 ; 42 ; 43) s'étendent vers l'extérieur depuis le receveur (5 ; 44).

2. Évacuation (5 ; 20 ; 30 ; 40 ; 50) selon la revendication 1, comprenant une grille rigide (14) agencée dans le receveur inférieur (5 ; 44).

3. Évacuation (5 ; 20 ; 30 ; 40 ; 50) selon la revendication 2, dans laquelle la grille est fabriquée en acier, de préférence en acier inoxydable.

4. Combinaison d'une évacuation sans soudure flexible (5 ; 20 ; 30 ; 40 ; 50) selon l'une quelconque des revendications précédentes et d'une couche de fond étanche à l'eau flexible (13) qui entoure l'évacuation (5 ; 20 ; 30 ; 40 ; 50) et est fusionnée aux bords (9 ; 32 ; 33 ; 42 ; 43) de l'évacuation (5 ; 20 ; 30 ; 40 ; 50).

5. Combinaison selon la revendication 4, dans laquelle la couche de fond étanche à l'eau flexible (13) est une membrane d'étanchéité.

6. Combinaison selon la revendication 4 ou 5, dans laquelle la couche de fond flexible (13) est soudée aux bords (9 ; 32 ; 33 ; 42 ; 43) de l'évacuation sans soudure flexible (5 ; 20 ; 30 ; 40 ; 50).
